# EUROPEAN PATENT SPECIFICATION

(11) **EP 1 534 772 B1**
(45) Date of publication and mention of the grant of the patent: **21.12.2011**
(21) Application number: 03788319.6
(22) Date of filing: 01.08.2003
(51) Int. Cl.: C08J 9/00

(54) **THERMOPLASTIC ELASTOMERS HAVING ENHANCED FOAMING AND PHYSICAL PROPERTIES**
THERMOPLASTISCHE ELASTOMERE MIT VERBESSERTEN SCHAUMEIGENSCHAFTEN UND PHYSIKALISCHEN EIGENSCHAFTEN
ELASTOMERES THERMOPLASTIQUES A PROPRIETES DE MOUSSAGE ET PHYSIQUES AMELIOREES

(30) Priority: 15.08.2002 US 403773 P
(43) Date of publication of application: 01.06.2005
(73) Proprietor: Advanced Elastomer Systems, L.P., Akron, OH 44311-1065 (US)
(72) Inventor: JACOB, Sunny, Akron, OH 44313 (US); SAHNOUNE, Abdelhadi, Houston, TX 77059 (US)
(74) Representative: von Kreisler Selting Werner
(86) International application number: PCT/US2003/024326
(87) International publication number: WO 2004/016678

(56) References cited:
- EP-A- 0 733 676
- DATABASE WPI Section Ch, Week 199518 Derwent Publications Ltd., London, GB; Class A35, AN 1995-136958 XP002269414 & JP 07 062130 A (TOYO KUORITIWAN KK) 7 March 1995 (1995-03-07)

## Description

### BACKGROUND OF THE INVENTION

### Field of the Invention

This invention relates generally to thermoplastic elastomer (TPE) material. Thermoplastic elastomers are broadly defined as rubber-like materials that, unlike conventional vulcanized rubbers, can be processed and recycled like thermoplastic materials, yet have properties and performance similar to that of vulcanized rubber at service temperatures. The invention more specifically relates to thermoplastic vulcanizates (TPV), which are thermoplastic elastomers with a cross-linked rubbery phase produced by the process of dynamic vulcanization. The thermoplastic vulcanizates of the invention are foamed materials produced by physical or chemical blowing agents, wherein processing characteristics and foam properties are improved by the inclusion of a modifier derived from styrene block copolymers. The invention also relates to foamed articles obtainable by the process of the invention.

### Description of the Prior Art

There has been considerable activity on the development of thermoplastic vulcanizate compositions, especially those based on polyolefin thermoplastic resins, which have good foaming properties, and on processes for producing foams having improved properties. U.S. Pat. No. 5,070,111, discloses a process of foaming thermoplastic vulcanizate compositions using water as the sole foaming agent. U.S. Pat. Nos. 5,607,629 and 5,788,889, describe methods for the production of foamed thermoplastic vulcanizate profiles by extrusion with a water blowing agent. U.S. Pat. No. 5,824,400 discloses foamed thermoplastic elastomer compositions which incorporate styrenic elastomers. Published European Patent Application No. 0 860 465 teaches a method of foaming thermoplastic vulcanizates using a water containing chemical compound which releases water at temperatures above the melting point of the thermoplastic vulcanizate. Published European Patent Application 0 872 516 discloses the use of polypropylene resins having specific rheological properties to enhance the foaming performance of olefinic thermoplastic vulcanizates.
EP-A-0733676 discloses a thermoplastic elastomer composition comprising a hydrogenated vinyl aromatic block copolymer, a polyolefin resin, an olefinic elastomer and additives.

However, the problems of providing thermoplastic elastomer foams which are soft, with good surface smoothness, low water absorption, improved compression set and compression load deflection, and having fine and uniform cell structure have not been overcome by the prior art.

### SUMMARY OF THE INVENTION

The present invention is based on the discovery that superior thermoplastic vulcanizate foams can be produced by incorporating into the thermoplastic vulcanizate, prior to foaming, a hydrogenated styrenic block copolymer. The use of this additive copolymer-provides a very soft foam product having a number of desirably attributes, including improved processability, high melt strength, high cell density and uniformity, smooth surface, low water absorption, with improved compression set and compression load deflection.

The present invention relates to a process for foaming a thermoplastic vulcanizate using a physical or chemical blowing agent, wherein a hydrogenated poly(styrene-*b*-isoprene-*b*-styrene) block copolymer (SEPS) is incorporated into the thermoplastic vulcanizate composition prior to foaming. Sufficient SEPS is incorporated to be effective in achieving the desired attributes. The invention also encompasses thermoplastic vulcanizate compositions containing the SEPS, foamed articles prepared therefrom, and to the use of SEPS to improve said foams,

In detail the invention relates to a process for preparing a foamed thermoplastic vulcanizate, comprising the steps of blending
A) polyolefin thermoplastic resin,
B) olefinic elastomer,
C) hydrogenated styrenic block copolymer,
D) crosslinking agent for said elastomer, and
E) optional additives;
processing the resulting blend under dynamic vulcanization conditions to at least partially crosslink said elastomer;
incorporating a blowing agent into the blend; and
activating said blowing agent to form a foam.

The present invention further relates to a foamed thermoplastic vulcanizate comprising
A) polyolefin thermoplastic resin,
B) an at least partially crosslinked elastomer,
C) hydrogenated styrenic block copolymer, and
D) optional additives.

Furthermore, the present invention relates to the use of a hydrogenated styrenic block copolymer in the preparation of a soft thermoplastic foam, said foam comprising polyolefin thermoplastic resin, an at least partially crosslinked olefinic elastomer, and optional additives, for the purposes of improving processability and melt strength and increasing cell density and uniformity.

Preferred embodiments are apparent from the dependent claims.

### DESCRIPTION OF THE PREFERRED EMBODIMENTS.

### THERMOPLASTIC VULCANIZATE

### Thermoplastic Resin Component

Thermoplastic resins suitable for use in the compositions of the invention include thermoplastic, crystalline polyolefin homopolymers and copolymers. They are desirably prepared from monoolefin monomers having 2 to. 7 carbon atoms, such as ethylene, propylene, 1-butene, isobutylene, I -pentene, 1-hexene. 1-octane, 3-methyl-1-pentene, 4-methyl-1-pentene, 5-methyl-l-hexene, mixtures thereof and copolymers thereof with (meth)acrylates and/or vinyl acetates, . Preferred, however, are monomer having 3. to. 6 carbon atoms, with propylene being most preferred. As used in the specification and claims the term polypropylene includes homopolymers of propylene as welt as reactor and/or random copolymers of propylene which can contain 1 to 30 weight percent of ethylene and/or an alpha-olefin comonomer of 4 to 16 carbon atoms, and mixtures thereof. The polypropylene can have different types of molecular structure such as isotactic or syndiotactic, and different degrees of crystallinity including materials with a high percentage of amorphous structure such as the "elastic" polypropylenes. Further polyolefins, which can be used in the invention, are high, low, linear-low and very low-density polyethylenes, and copolymers of ethylene with (meth)acrylates and/or vinyl acetates. These polyolefins include both linear or branched polymers.

The polyolefins mentioned above can be made using coordination polymerization catalyst systems, such as conventional Ziegler/Natta catalysts, or by single site catalyst systems, such as metallocene catalysts, and as well by other known means of olefin polymerization, such as free-radical polymerization. Commercially available polyolefins may be used in the practice of the invention.

The amount of thermoplastic polyolefin resin found to provide useful thermoplastic elastomer compositions is generally from 8 to 90 weight percent Preferably, the thermoplastic polyolefin content will range from 9 to 60 percent by weight

### Elastomer Component

Suitable rubbers include non-polar, rubbery copolymers of two or more alpha-monoolefins, preferably copolymerized with at least one polyene, usually a diene... Saturated monoolefin copolymer rubber, for example ethylene-propylene copolymer, rubber (EPM) can be used. However, unsaturated monoolefin rubber such as EPDM rubber is more suitable. EPDM is a terpolymer of ethylene, propylene and a non-conjugated diene. Satisfactory non-conjugated dienes include 5-ethylidene-2-norbornene (ENB); 1,4-hexadiene; 5-methylene-2-norbomene (MNB); 1,6-octadiene; 5-methyl-1,4-hexadiene; 3,7-dimethyl-1,6-octadiene; 1,3-cyclopentadiene; 1,4-cyclohexadiene; dicyclopentadiene (DCPD); and vinyl norbornene (VNB).

Butyl rubbers are also useful in the thermoplastic vulcanizate compositions.. As used in the specification and claims, the term butyl rubber includes copolymers of an isoolefin and a conjugated monoolefin, terpolymers of an isoolefin with or without a conjugated monoolefin, divinyl aromatic monomers and the halogenated derivatives of such copolymers and terpolymers. Another suitable copolymer within the scope of the olefin rubber of the present invention is a copolymer of a C₄₋₇ isomonoolefin and a para-alkylstyrene, and preferably a halogenated, derivative thereof. The amount of halogen in the copolymer, predominantly in the para-alkylstyrene, is from 0.1 to 10 weight percent. A preferred example is the brominated copolymer of isobutylene and para-methylstyrene. Natural rubbers are also olefin rubbers suitable for use in the thermoplastic elastomer composition. The amount of rubber in the thermoplastic vulcanizate generally ranges from 92 to 10 weight percent Preferably the rubber content will be in the range of from 40 to 91 weight percent.

### Additives

The thermoplastic vulcanizate may optionally contain reinforcing and non-reinforcing fillers, plasticizers, antioxidants, stabilizers, rubber processing oils, extender oils, lubricants, antiblocking agents, antistatic agents, waxes, foaming agents, pigments, flame retardants and other processing aids known in the rubber compounding art. Such additives may comprise up to 70 weight percent, more preferably up to 65 weight percent, of the total composition. Fillers and extenders which can be utilized include conventional inorganics such as calcium carbonate, clays, silica, talc, titanium dioxide, carbon black and the like. The rubber processing oils generally are paraffinic, napthenic or aromatic oils derived from petroleum fractions. The oils are selected from those ordinarily used in conjunction with the specific rubber or rubber component present in the composition.

### Processing

The rubber component of the thermoplastic vulcanizate is generally present as small, i.e. micro size, particles within a continuous thermoplastic resin matrix, although a co-continuous morphology or a phase inversion is also possible depending upon the amount of rubber relative to thermoplastic resin and the degree of vulcanisation, if any, of the rubber. Preferably, the rubber is at least partially vulcanized, and most preferably it is fully vulcanized (crosslinked).

Adding an appropriate rubber curative to the blend of thermoplastic olefin polymer (or thermoplastic resin) and olefin rubber (or cross-linkable elastomer) and vulcanizing the rubber (elastomer) to the desired degree under vulcanizing conditions can achieve the partial or full crosslinking. It is preferred that the rubber be crosslinked by the process of dynamic vulcanization. As used in the specification and claims, the term dynamic vulcanization means a vulcanization or crosslinking (curing) process wherein the rubber is vulcanized under conditions of shear at a temperature above the melting point of the thermoplastic resin component.

Those of ordinary skill in the art will appreciate the appropriate quantities and types of vulcanizing agents, and the conditions required to achieve the desired vulcanization. Any known crosslinking system can be used, so long as it is suitable under the vulcanization conditions for the elastomer component and it is compatible with the thermoplastic olefin polymer component of the composition. Crosslinking (curing) agents include sulfur, sulfur donors, metal oxides, phenolic resin systems, maleimides, peroxide based systems, hydrosilylation systems, high energy radiation and the like, both with and without accelerators and co-agents.

The terms fully vulcanized or completely vulcanized as used herein mean that the olefin rubber component of the composition has been crosslinked to a state in which the elastomeric properties of the crosslinked rubber are similar to those of tha rubber in its conventional vulcanized rubber state. The degree of crosslinking (or cure) of the rubber can also be expressed in terms of gel contend, crosslink density or amount of uncrosslinked rubber that is extractable by a rubber solvent. All of these descriptions are well known in the art. A typical partially crosslinked composition will have less than 50 to less than 15 weight percent of the elastomer extractable by a rubber solvent, while a fully crosslinked composition Will have less than 5 weight percent, and preferably less than 3 weight percent, of the elastomer extractable by a rubber solvent.

Usually 5 to 20 parts by weight of the crosslinking agent or system are used per 100 parts by weight of the rubber component to be vulcanized.

The thermoplastic vulcanizates are rubbery materials having tensile set values of 50% or less, which meet the standards for rubber as defined by ASTM D1566.

### Styrenic Block Copolymer

The composition of the invention includes a hydrogenated styrene block copolymer component. This component is generally described as a hydrogenated poly(styrene-b-isoprene-b-styrene) block copolymer (SEPS).. One such material particularly suited for use in the process of the invention is Septon™ 2002, available from Septon Company of America Inc., a Kuraray Group company.

The amount of the SEPS component in the composition of the invention generally ranges from 1 to 10 weight percent, based on the total weight of the composition including the thermoplastic resin component, the rubber component, additives and the SEPS component. The preferred amount of SEPS ranges from 1 to 10 weight percent, with 2 to 4 weight percent being most preferred. Alternatively, the amount of SEPS can be expressed in terms of parts per hundred parts of rubber (phr). The preferred amount of SEPS, expressed in this manner, ranges from 3 to 40 phr with a range of 5 to 15 phr being most preferred.

In the preparation of thermoplastic vulcanizates of the invention, the SEPS. was generally incorporated directly into the thermoplastic resin/rubber blend during production of the thermoplastic vulcanizate, in a one step process, so that it was an integral part of the composition. Since the SEPS. block copolymer is hydrogenated it contains very low levels of unsaturation and does not co-cure with the elastomer component during dynamic vulcanization. It is believed that the. SEPS remain as a discrete phase in the thermoplastic vulcanizate. Alternatively, the SEPS can be mechanically blended with a preformed thermoplastic vulcanizate composition, or it can be introduced into the foaming process simultaneously with the thermoplastic vulcanizate.

### EXAMPLES

Dynamically vulcanized blends of resins, rubber components and SEPS were converted into foam products by being fed into an extruder or other mixing device capable of maintaining melt temperatures in the range of 165°C to 220°C. If the blowing agent was a solid material, it was also blended with the components prior to introduction into the mixing device. When the blowing agent was a gas or liquid, it was injected into the mixing device through an appropriate inlet The blowing agent was thus thoroughly dispersed in the molten blend, and the mixture was maintained at a pressure sufficient to prevent premature foaming. The mixture was passed through a die or other appropriate outlet, where foaming occurred. The foamed product was cooled in air or in a water mist

In the following examples thermoplastic vulcanizates were prepared from blends of polypropylene thermoplastic resin and EPDM rubber, with common additives and processing aids. SEPS was incorporated into the blends and the rubber component was cross-linked by dynamic vulcanization using a phenolic resin cure system to prepare the vulcanizates. For the fabrication of foamed articles by an extrusion process, the thermoplastic vulcanizate was introduced into a single screw extruder and thoroughly melted. The blowing agent, water in the examples set forth in Table 1, was then injected under pressure into the molten thermoplastic elastomer at rates of 1.1 to 1.4 weight percent The melt was mixed and conveyed, under pressure, to the extruder exit and through a shaping die. The hot and fragile foam was transferred to a conveyor belt where it was cooled by air and water mist. The foamed article may then be cut or shaped for specific applications. Foamed profiles can be either extruded alone as described or coextruded with a dense carrier.

The following measurement methods were used in evaluating the examples of the invention:
Tensile strength at break; tensile set; tensile modulus; elongation at break -
ASTM D412 (ISO 37, type. 2)
Shore hardness - ASTM D2240
Specific gravity - ASTM D792
Surface (Ra) - Surface finish was evaluated as the arithmetic average of roughness irregularities measured from a mean line with the sampling length, using a Surface Analyzer System from Federal Products Corporation, Providence, RI.
Compression set - The sample was compressed inside spaced sample holders to 40% of its initial height, and held at 100°C for 22 hours. The sample was removed and allowed to recover for 30 minutes at room temperature. Compression set was then determined as: CS(%) = (Hᵢₙᵢₜᵢₐₗ - H_{final})/ (Hᵢₙᵢₜᵢₐₗ H₀) × 100, where Hₒ is the gap of the sample holder (60% of Hᵢₙᵢₜᵢₐₗ).
Compression load deflection - The force necessary to compress a 100 mm sample to 40% of its original height, at room temperature.
Water absorption - Two test methods were used to measure water absorption, In the first method (A) a weighed foam profile 50 mm long was submerged in water at room temperature two inches below the surface of the water. The specimen was allowed to remain submerged for either 24 hours at atmosperhic pressure, or for three minutes at 77.855 kPa (23 inches Hg) vacuum (above the surface of the water). After the appropriate time, the specimen was removed, blotted dry, weighed and the percent change in mass was calculated. In the second method (B) a weighed foam profile 254. mm long was submerged in water at room temperature eight inches below the surface of the watery with a one inch section of the specimen located above the water at each end. The specimen was allowed to remain thus submerged for either 24 hours at atmospheric pressure, or for five minutes at 88.01 kPa (26 inches. Hg) vacuum (above the surface of the water). After the appropriate time, the specimen was removed, blotted dry, weighed and the percent change in mass was calculated.

**TABLE 1**

| Example ⇒ | Control A | Control B | 1 | 2 | 3 | 4 | 5 |
|---|---|---|---|---|---|---|---|
| Components ⇓(phr) | | | | | | | |
| Polypropylene | 42 | 32 | 35 | 30 | 25 | 22 | 20 |
| EPDM rubber | 100 | 100 | 100 | 100 | 100 | 100 | 100 |
| Process oil | 150 | 150 | 150 | 150 | 150 | 150 | 150 |
| Additives/Curative | 63 | 63 | 63 | 63 | 63 | 63 | 63 |
| Septon™2002 | 0 | 0 | 12 | 15 | 20 | 15 | 20 |
| Branched polypropylene | | | | | | 8 | |
| | | | | | | | |
| TPE Properties ⇓ | | | | | | | |
| Hardness (Shore A) | 66 | 60 | 61 | 57 | 54 | 56 | 47 |
| Ultimate tensile strength (MPa) | 6.9 | 5.6 | 5.1 | 3.2 | 4.0 | 4.6 | 3.4 |
| Modulus - 100 (MPa) | 2.71 | 2.63 | 1.9 | 1.7 | 1.5 | 1.6 | 1.1 |
| Ultimate elongation (%) | 520 | 368 | 377 | 354 | 368 | 384 | 332 |
| Weight gain (%) | 117 | 83 | 92 | 96 | 114 | 106 | 131 |
| Viscosity (poise) | 353 | 310 | 516 | 637 | 458 | 472 | 780 |
| | | | | | | | |
| Foam Properties ⇓ | | | | | | | |
| Specific gravity (1.4 wt% water) | 0.45 | 0.40 | 0.42 | 0.40 | 0.41 | 0.41 | 0.41 |
| Surface, Ra (µm) | 9.1 | 8.5 | 6.8 | 8.4 | 7.4 | 7.6 | 8.8 |
| H₂O absorption (test A) - Atmosphere (%) | | 6.1 | 6.1 | 5.5 | 7.6 | 6.2 | 9.5 |
| Compression set (%) 100°, C, 22 hrs. | 52 | 39 | 32 | 32 | 31 | 30 | 29 |
| Compression load deflection (kgF/100mm) | 0.77 | 0.44 | 0.56 | 0.58 | 0.50 | 0.69 | 0.67 |

As can be seen from the examples in Table 1, the foamed thermoplastic elastomer of the invention provides a smooth surface, low water absorption, good compression set and improved compression load defection. Visual inspection shows that foam cell density is high and the cells are uniform in structure.

Additional examples were prepared using the same thermoplastic elastomer formulation (with 35 phr polypropylene), but varying the amount of SEPS or replacing the SEPS with other block copolymers. Foams were generated from the compositions thus prepared, using various levels of water as the blowing agent in order to obtain foams with various densities. The thermoplastic elastomer and foam properties were evaluated, and the results are set forth in Tables 2 and 3.

**TABLE 2**

| Examples⇒ | 6 | 7 | 8 | 9 | 10 | 11 | 12 |
|---|---|---|---|---|---|---|---|
| Block Copolymer⇓ (phr) | | | | | | | |
| SEPS | 5 | | | | | | |
| SEPS | | 12 | | | | | |
| SEEPS | | | 12 | | | | |
| SEBS-1 | | | | 12 | | | |
| SEBS-2 | | | | | 12 | | |
| SEPS | | | | | | 25 | |
| SEPS | | | | | | | 40 |
| | | | | | | | |
| TPE Properties⇓ | | | | | | | |
| Ultimate tensile strength (MPa) | 5.37 | 5.43 | 6.08 | 5.68 | 5.72 | 3.74 | 3.15 |
| Modulus - 100 (MPa) | 2.12 | 1.97 | 1.99 | 1.96 | 2.24 | 1.72 | 1.75 |
| Ultimate elongation (%) | 375 | 364 | 425 | 381 | 353 | 330 | 350 |
| Extensional viscosity (kPa) | 265 | 143 | 266 | 259 | 224 | 79 | 49 |

| | | | | | | | |
|---|---|---|---|---|---|---|---|
| SEPS = Septon™ 2002 - hydrogenated poly(styrene-*b*-isoprene-*b*-styrene) SEEPS = Septon™ 4033 - hydrogenated poly(styrene-*b*-isoprene-co-butadiene-*b*-styrene) SEBS-1 = Septon™ 8007 - hydrogenated poly(styrene-*b*-butadiene-*b*-styrene) SEBS-2 = Kraton™ G1652 - hydrogenated poly(styrene-*b*-butadiene-*b*-styrene) | | | | | | | |

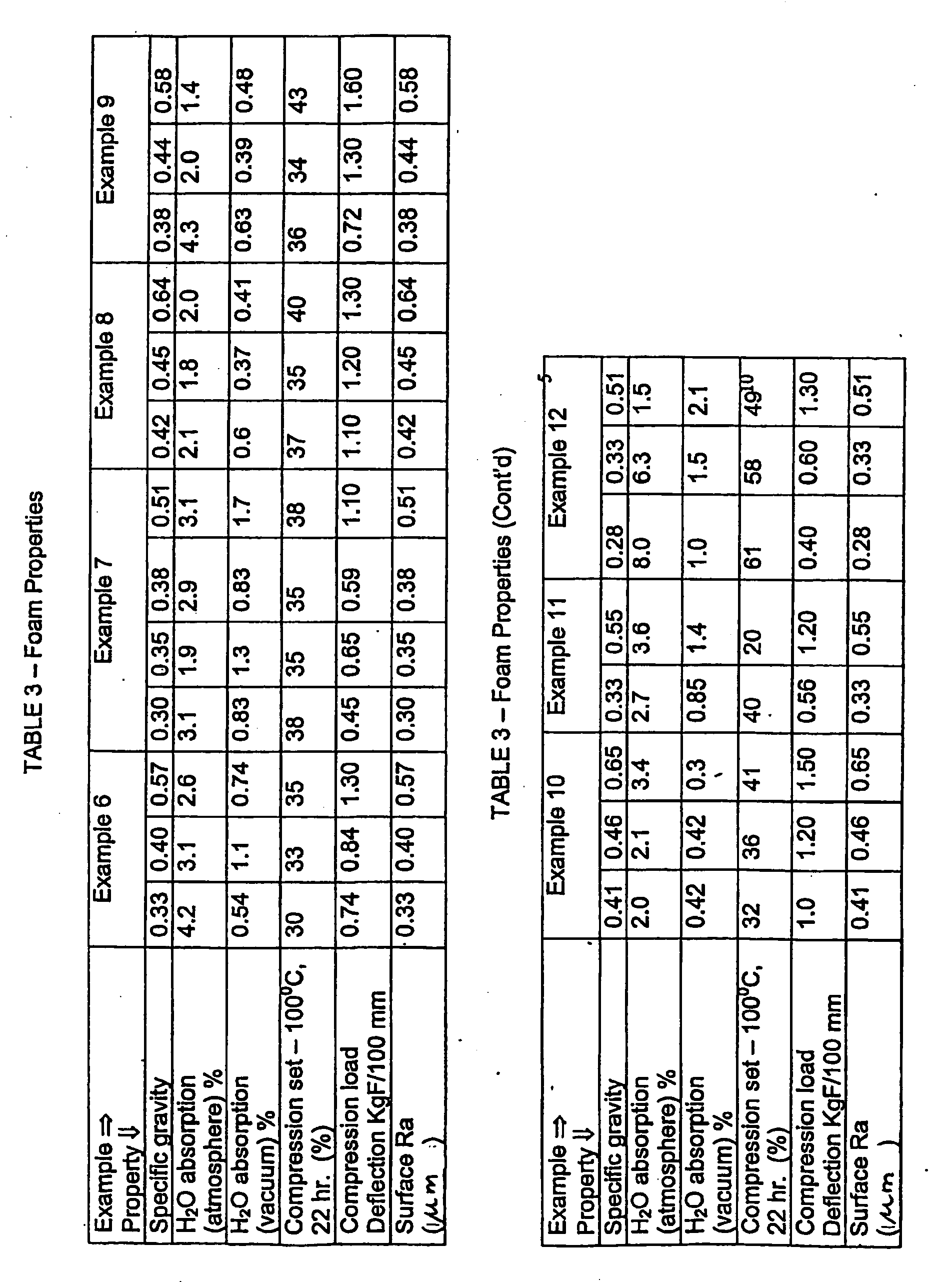

The materials used in the thermoplastic vulcanizates of Table 1 were EPDM. rubber - Vistalon™ 3666 (ExxonMobil Chemical Co.); polypropyene - D008M™ (Aristech Chemical Corp.); process oil - Sunpar™ 150M; clay - Icecap K™ (Burgess); curative - SP-1045™ (Schenectady International); carbon black - Ampacet 49974 (Ampacet Corp.); branched polypropylene - HMS 130D (Borealis)..

The foamed thermoplastic vulcanizate composition and the molded and shaped articles made therefrom are useful in a variety of applications such as handles and grips for tools or utensils, as well as weather strip for automotive and construction uses.

## Claims

1. Process for preparing a foamed thermoplastic vulcanizate, comprising the steps of:
A) blending
A) polyolefin thermoplastic resin,
B) olefinic elastomer,
C) hydrogenated styrenic block copolymer,
D) crosslinking agent for said elastomer, and
E) optional additives;
B) processing the resulting blend under dynamic vulcanization conditions to at least partially crosslink said elastomer,
C) incorporating a blowing agent into the blend; and activating said blowing agent to form a foam.

2. The process of claim 1 wherein said blend contains from 8 to 90 weight percent polyolefin thermoplastic resin (A) and from 92 to 10 weight percent olefinic elastomer (B), based on the total weight of (A) + (B), and from 1 to 10 weight percent of block copolymer (C), based on the total weight of the blend.

3. The process of claim 1 wherein the dynamic vulcanization is carried out to the extent that said elastomer (B) is fully crosslinked.

4. The process of claim 1 wherein said polyolefin thermoplastic resin (A) is polypropylene, said olefinic elastomer (B) is EPDM rubber, and said block copolymer (C) is hydrogenated poly(styrene-*b*-isoprene-*b*-styrene) block copolymer.

5. The process of claim 1 wherein said crosslinking agent is a phenolic resin system.

6. A foamed thermoplastic vulcanizate comprising
A) polyolefin thermoplastic resin,
B) an at least partially crosslinked olefinic elastomer,
C) hydrogenated styrenic block copolymer, and
D) optional additives..

7. The thermoplastic vulcanizate of claim 6 wherein said composition contains from 8 to 90 weight percent polyolefin thermoplastic resin (A) and from 92 to 10 weight percent olefinic elastomer (B), based on the total weight of (A) + (B), and from 1 to 10 weight percent of block copolymer (C), based on the total weight of the blend.

8. The thermoplastic vulcanizate of claim 6 wherein said elastomer (B) is fully crosslinked.

9. The thermoplastic vulcanizate of claim 6 wherein said polyolefin Thermoplastic elastomer (A) is polypropylene, said olefinic elastomer (B) is EPDM rubber and said block copolymer (C) is hydrogenated poly(styrene-*b*-isoprene-*b*-styrene) block copolymer.

10. The use of a hydrogenated styrenic block copolymer in the preparation of a soft thermoplastic foam, said foam comprising polyolefin thermoplastic resin, an at least partially crosslinked olefinic elastomer, and optional additives, for the purposes of improving processability and melt strength and increasing cell density and uniformity.

11. The use according to claim 10 wherein said block copolymer is hydrogenated poly(styrene-*b*-isoprene-*b*-styrene) block copolymer, said polyolefin thermoplastic elastomer is polypropylene, said olefinic elastomer is EPDM rubber.

## Patentansprüche

1. Verfahren zur Herstellung eines geschäumten thermoplastischen Vulkanisats, umfassend die Schritte:
A) Mischen von
A) thermoplastischem Polyolefinharz,
B) olefinischem Elastomer,
C) hydriertem styrolischen Blockcopolymer,
D) Vernetzungsmittel für das Elastomer und
E) optionalen Additiven;
B) Verarbeiten des resultierenden Gemischs unter Bedingungen der dynamischen Vulkanisation, wobei das Elastomer wenigstens teilweise vernetzt wird;
C) Einarbeiten eines Treibmittels in das Gemisch und Aktivieren des Treibmittels unter Bildung eines Schaums.

2. Verfahren gemäß Anspruch 1, wobei das Gemisch 8 bis 90 Gew.-% thermoplastisches Polyolefinharz (A) und 92 bis 10 Gew.-% olefinisches Elastomer (B), bezogen auf das Gesamtgewicht von (A) + (B), und 1 bis 10 Gew.-% Blockcopolymer (C), bezogen auf das Gesamtgewicht des Gemischs, enthält.

3. Verfahren gemäß Anspruch 1, wobei die dynamische Vulkanisation bis zu einem solchen Grad durchgeführt wird, dass das Elastomer (B) vollständig vernetzt ist.

4. Verfahren gemäß Anspruch 1, wobei es sich bei dem thermoplastischen Polyolefinharz (A) um Polypropylen, bei dem olefinischen Elastomer (B) um EPDM-Kautschuk und bei dem Blockcopolymer (C) um hydriertes Poly(styrol-b-isopren-b-styrol)-Blockcopolymer handelt.

5. Verfahren gemäß Anspruch 1, wobei das Vernetzungsmittel ein phenolisches Harzsystem ist.

6. Geschäumtes thermoplastisches Vulkanisat, umfassend
A) thermoplastisches Polyolefinharz,
B) ein wenigstens teilweise vernetztes olefinisches Elastomer,
C) hydriertes styrolisches Blockcopolymer und
D) optionale Additive.

7. Thermoplastisches Vulkanisat gemäß Anspruch 6, wobei die Zusammensetzung 8 bis 90 Gew.-% thermoplastisches Polyolefinharz (A) und 92 bis 10 Gew.-% olefinisches Elastomer (B), bezogen auf das Gesamtgewicht von (A) + (B), und 1 bis 10 Gew.-% Blockcopolymer (C), bezogen auf das Gesamtgewicht des Gemischs, enthält.

8. Thermoplastisches Vulkanisat gemäß Anspruch 6, wobei das Elastomer (B) vollständig vernetzt ist.

9. Thermoplastisches Vulkanisat gemäß Anspruch 6, wobei es sich bei dem thermoplastischen Polyolefinharz (A) um Polypropylen, bei dem olefinischen Elastomer (B) um EPDM-Kautschuk und bei dem Blockcopolymer (C) um hydriertes Poly(styrol-b-isopren-b-styrol)-Blockcopolymer handelt.

10. Verwendung eines hydrierten styrolischen Blockcopolymers bei der Herstellung eines weichen thermoplastischen Schaumstoffs, wobei der Schaumstoff thermoplastisches Polyolefinharz, ein wenigstens teilweise vernetztes olefinisches Elastomer und optionale Additive zur Verbesserung der Verarbeitbarkeit und der Festigkeit der Schmelze und zur Erhöhung der Zelldichte und der Gleichmäßigkeit umfasst.

11. Verwendung gemäß Anspruch 10, wobei es sich bei dem Blockcopolymer um hydriertes Poly(styrol-b-isopren-b-styrol)-Blockcopolymer, bei dem thermoplastischen Polyolefinharz um Polypropylen und bei dem olefinischen Elastomer um EPDM-Kautschuk handelt.

## Revendications

1. Procédé pour la préparation d'un vulcanisat thermoplastique en mousse, comprenant les étapes consistant :
A) à mélanger
A) une résine thermoplastique polyoléfinique,
B) un élastomère oléfinique,
C) un copolymère séquencé styrénique hydrogéné,
D) un agent de réticulation pour ledit élastomère, et
E) des additifs facultatifs ;
B) à traiter le mélange résultant dans des conditions de vulcanisation dynamique pour réticuler au moins partiellement ledit élastomère ;
C) à incorporer un agent porogène au mélange ; et à activer ledit agent porogène pour former une mousse.

2. Procédé suivant la revendication 1, dans lequel ledit mélange contient 8 à 90 pour cent en poids de résine thermoplastique polyoléfinique (A) et 92 à 10 pour cent en poids d'élastomère oléfinique (B), sur la base du poids total de (A) + (B), et 1 à 10 pour cent en poids du copolymère séquencé (C), sur la base du poids total du mélange.

3. Procédé suivant la revendication 1, dans lequel la vulcanisation dynamique est effectuée jusqu'à la réticulation totale dudit élastomère (B).

4. Procédé suivant la revendication 1, dans lequel ladite résine thermoplastique polyoléfinique (A) est le polypropylène, ledit élastomère oléfinique (B) est le caoutchouc EPDM, et ledit copolymère séquencé (C) est un copolymère séquencé poly(styrène-*b*-isoprène-*b*-styrène) hydrogéné.

5. Procédé suivant la revendication 1, dans lequel ledit agent de réticulation est un système de résine phénolique.

6. Vulcanisat thermoplastique en mousse, comprenant
A) une résine thermoplastique polyoléfinique,
B) un élastomère oléfinique au moins partiellement réticulé,
C) un copolymère séquencé styrénique hydrogéné, et
D) des additifs facultatifs.

7. Vulcanisat thermoplastique suivant la revendication 6, dans lequel ladite composition contient 8 à 90 pour cent en poids de résine thermoplastique polyoléfinique (A) et 92 à 10 pour cent en poids d'élastomère oléfinique (B), sur la base du poids total de (A) + (B), et 1 à 10 pour cent en poids de copolymère séquencé (C), sur la base du poids total du mélange.

8. Vulcanisat thermoplastique suivant la revendication 6, dans lequel ledit élastomère (B) est totalement réticulé.

9. Vulcanisat thermoplastique suivant la revendication 6, dans lequel ledit élastomère thermoplastique polyoléfinique (A) est le polypropylène, ledit élastomère oléfinique (B) est le caoutchouc EPDM, et ledit copolymère séquencé (C) est un copolymère séquencé poly(styrène-*b-*isoprène-*b*-styrène) hydrogéné.

10. Utilisation d'un copolymère séquencé styrénique hydrogéné dans la préparation d'une mousse thermoplastique souple, ladite mousse comprenant une résine thermoplastique polyoléfinique, un élastomère oléfinique au moins partiellement réticulé, et des additifs facultatifs, aux fins d'amélioration de l'aptitude au traitement et de la résistance en masse fondue et de l'augmentation de la densité et de l'uniformité des cellules.

11. Utilisation suivant la revendication 10, dans laquelle ledit copolymère séquencé est un copolymère séquencé poly(styrène-*b*-isoprène-*b*-styrène) hydrogéné, ledit élastomère thermoplastique polyoléfinique est le polypropylène, ledit élastomère oléfinique est le caoutchouc EPDM.
